Europäisches Patentamt

European Patent Office

Office européen des brevets

(19)

(11) Numéro de publication : **0 332 481 B1**

(12) **FASCICULE DE BREVET EUROPEEN**

(45) Date de publication du fascicule du brevet :
28.10.92 Bulletin 92/44

(51) Int. Cl.$^5$ : **F16L 55/02**

(21) Numéro de dépôt : **89400401.9**

(22) Date de dépôt : **13.02.89**

(54) **Conduit tubulaire de raccordement comportant des moyens d'atténuation acoustique.**

(30) Priorité : **09.03.88 FR 8803054**

(43) Date de publication de la demande :
**13.09.89 Bulletin 89/37**

(45) Mention de la délivrance du brevet :
**28.10.92 Bulletin 92/44**

(84) Etats contractants désignés :
**DE GB IT**

(56) Documents cités :
**WO-A-85/03755**
**CH-A- 568 516**
**GB-A- 2 134 620**
**US-A- 2 874 722**

(73) Titulaire : **AUTOMOBILES PEUGEOT**
**75, avenue de la Grande Armée**
**F-75116 Paris (FR)**
Titulaire : **AUTOMOBILES CITROEN**
**62 Boulevard Victor-Hugo**
**F-92200 Neuilly-sur-Seine (FR)**

(72) Inventeur : **Le Fol Marcel**
**12 Impasse du Verger Domloup**
**35410 Chateaugiron (FR)**
Inventeur : **Robic Pascal**
**La Cheurtière**
**35580 Guignen (FR)**

(74) Mandataire : **Kohn, Philippe et al**
**c/o CABINET LAVOIX 2, place d'Estienne**
**d'Orves**
**F-75441 Paris Cédex 09 (FR)**

EP 0 332 481 B1

Jouve, 18, rue Saint-Denis, 75001 PARIS

## Description

La présente invention a pour objet un conduit tubulaire de raccordement.

Elle vise plus particulièrement à la réalisation d'un conduit tubulaire de raccordement monté dans le circuit des gaz d'alimentation d'un moteur à combustion interne et pouvant par exemple être utilisé pour assurer la liaison entre une prise d'air et un carburateur.

On connaît du document GB-A-2.134.620 un conduit de raccordement du type réalisé par enroulement et emboîtement d'un profilé constitué par une mortaise qui reçoit un tenon opposé. On constate que cette conception ne permet pas de garantir l'étanchéité de l'espace interne en creux de la mortaise et qu'elle n'est donc pas efficace pour faire fonction de chambre d'atténuation acoustique.

L'invention a pour but de fournir un conduit tubulaire de raccordement qui permette d'atténuer, voire de supprimer les bruits ou bourdonnements, et notamment les bruits d'admission, provoqués par les pulsations des gaz à l'admission dans un moteur à combustion interne.

Dans ce but l'invention propose un conduit tubulaire de raccordement du type constitué par un profilé enroulé en hélice à spires jointives autour de l'axe du conduit, dont la section est oblongue avec sa plus grande dimension qui s'étend sensiblement parallèlement à l'axe de l'hélice et qui comporte un tenon longitudinal faisant saillie vers l'extérieur et une mortaise longitudinale de profil correspondant agencée parallèlement et de manière opposée au tenon, caractérisé en ce que ledit profilé est un profilé tubulaire qui délimite au moins une chambre hélicoïdale d'atténuation acoustique séparée des moyens d'assemblage par tenon et mortaise.

L'amortissement est ainsi obtenu grâce à l'aménagement d'une paroi interne tubulaire qui est soumise à l'onde sonore que l'on désire amortir et qui en limite donc le contact avec la paroi extérieure qui transmet les bruits à l'environnement.

Selon d'autres caractéristiques de l'invention :
- le tenon et la mortaise sont agencés dans un plan contenant la plus grande dimension de la section oblongue ;
- la chambre hélicoïdale d'atténuation acoustique est divisée en deux chambres hélicoïdales parallèles par une paroi intérieure transversale du profilé ;
- la paroi interne comporte au moins une ouverture reliant la chambre d'atténuation à l'espace interne du conduit et qui peut être formée d'une série de trous répartis en hélice autour de l'axe du conduit; et
- le conduit est réalisé en matériau élastomère naturel ou synthétique ou en thermoplastique souple.

D'autres caractéristiques et avantages de l'invention apparaîtront à la lecture de la description détaillée qui va suivre pour la compréhension de laquelle on se reportera au dessin annexé dans lequel :
- La figure 1 est une vue, partiellement en coupe axiale, d'un conduit de raccordement réalisé conformément aux enseignements de l'invention ;
- les figures 2 et 3 représentent deux modes de réalisation de l'invention qui diffèrent de celui de la figure 1 par la forme et la structure du profilé tubulaire.

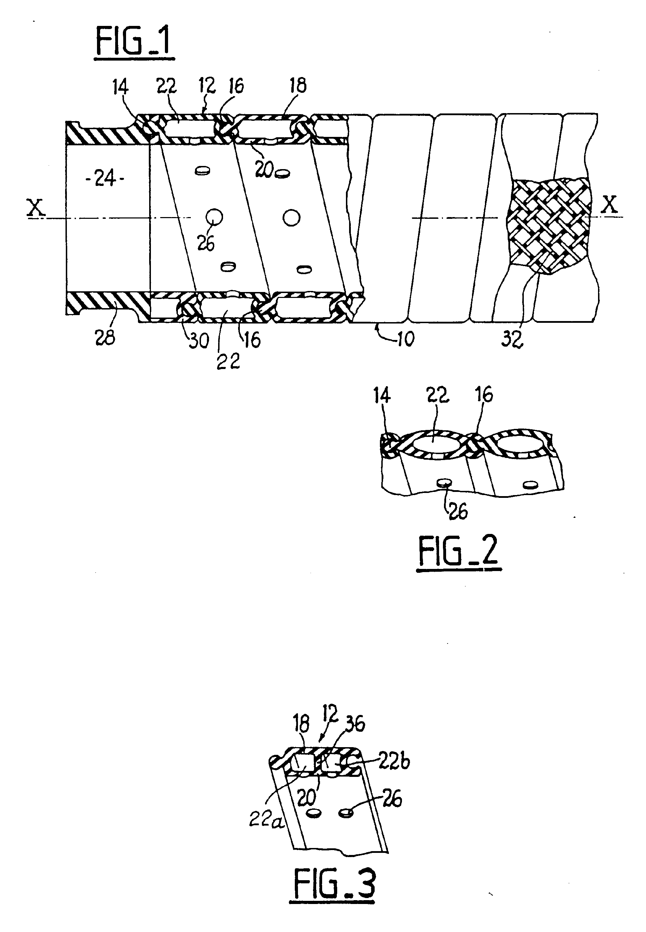

Le conduit tubulaire de raccordement 10 représenté à la figure 1 est constitué par un profilé tubulaire 12 enroulé en hélice à spires jointives autour de l'axe X-X du conduit.

Le profilé tubulaire 12 est un profilé réalisé en matériau élastomère qui possède une section oblongue rectangulaire délimitant une cavité intérieure longitudinale dont la plus grande dimension s'étend sensiblement parallèlement à l'axe X-X du conduit 10.

Le profilé tubulaire 12 comporte un tenon longitudinal continu 14 qui fait saillie vers l'extérieur depuis la paroi tubulaire du profilé. De manière opposée par rapport au tenon 14 dans le sens de la longueur du profilé 12, ce dernier comporte une mortaise longitudinale 16 parallèle de profil correspondant à celui du tenon 14.

Dans les modes de réalisation représentés aux figures 1 à 3, le tenon 14 et la mortaise 16 présentent en section un profil circulaire qui permet de les emboîter respectivement l'un dans l'autre par déformation élastique de la mortaise 16 de façon à constituer le conduit tubulaire 10 par enroulement en hélice. Le pas axial de l'hélice est sensiblement égal à la plus grande dimension de la section du profilé 12.

Comme on peut le constater à la coupe axiale représentée à la figure 1, le conduit 10 ainsi réalisé possède en fait deux parois tubulaires coaxiales délimitant entre elles une chambre d'atténuation acoustique.

Une première paroi tubulaire externe est constituée par la juxtaposition continue de la paroi tubulaire externe 18 du profilé 12. Une paroi tubulaire interne parallèle et coaxiale est constituée par la juxtaposition continue de la paroi opposée 20 du profilé tubulaire 12.

La chambre d'atténuation acoustique est ici une chambre hélicoïdale continue formée par la cavité interne 22 du profilé 12.

Conformément à l'invention, il est prévu une série de trous 26 agencés en hélice autour de l'axe X-X qui traversent la paroi interne 20 du profilé tubulaire 12, afin de mettre en communication l'espace interne 24 du conduit tubulaire 10 avec la chambre 22.

Afin de permettre son raccordement, par exemple à un corps de carburateur, le conduit tubulaire 10 peut être muni d'un raccord d'extrémité 28 obtenu par surmoulage d'un matériau de même nature sur l'extrémité 30 du profilé tubulaire 12 coupé perpendiculairement à l'axe X-X'.

Afin de renforcer le conduit tubulaire 10 il est possible de l'enrober extérieurement par une nappe en matériau tressé 32.

Le mode de réalisation représenté à la figure 2 diffère de celui de la figure 1 par la section du profilé tubulaire qui est ici une section elliptique dont le grand axe est agencé parallèlement à l'axe X-X du conduit tubulaire 10.

Dans les modes de réalisation représentés à la figure 3, la cavité 22 du profilé tubulaire 12 est divisée en deux cavités hélicoïdales 22a et 22b qui sont séparées par une paroi transversale 36 venue de matière avec les parois 18 et 20 du profilé tubulaire 12.

Chacune des deux chambres d'atténuation hélicoïdales 22a et 22b ainsi formées peut être reliée à l'espace intérne 24 du conduit tubulaire 10 soit par une série de trous 26.

La nature des deux parois 18 et 20 du profilé n'est pas nécessairement la même car il peut être préférable d'utiliser des parois de structure et d'épaisseur différentes afin de s'éloigner, dans le spectre sonore, des résonnances à amortir.

La lamelle d'air, ou de mélange de combustion, contenue dans la chambre d'atténuation acoustique 22 entre les parois 18 et 20 a pour effet d'amortir les bruits. L'épaisseur radiale de cette lamelle est fonction du problème à résoudre, son choix se faisant de façon que les deux systèmes oscillants constitués par chacune des parois restent découplés afin d'assurer que les modes critiques de vibration des deux parois ne se superposent pas.

Une paroi interne 20 mince tournée vers le côté émission des bruits à atténuer, à une distance appropriée de la paroi externe 18 évite la propagation des bruits dans le conduit de raccordement, les ouvertures prévues dans la paroi interne 20 améliorant de plus l'amortissement par absorption phonique.

Le profilé 12 peut être réalisé en longueur droite puis enroulé sur un mandrin pour obtenir des conduits tubulaires de raccordement de grand diamètre, mais il peut également être obtenu par extrusion en hélice pour permettre la réalisation de conduits de petits diamètres.

Le profilé en élastomère peut être vulcanisé en continu avant son assemblage ou après son assemblage. Il peut être réalisé en matériau élastomère homogène ou composite à deux voire éventuellement trois composants. Cette réalisation composite est particulièrement avantageuse en ce qu'elle permet de réaliser les tenons et mortaises en un matériau élastomère de module élastique élevé, la paroi externe 18 en matériau élastomère compact de modules élastiques moyens, tandis que la paroi interne 20 peut être réalisée en matériau élastomère à faible densité en caoutchouc compact de faible épaisseur ou en matériau thermoplastique. Pour améliorer l'effet d'absorption du matériau constituant la paroi interne, on peut brosser l'élastomère basse densité pour y créer une série de cellules débouchantes vers l'intérieur. Il est également possible de floquer la paroi interne.

L'énergie absorbée dans le conduit est d'autant plus grande que l'énergie réfléchie à la surface interne est faible et que les impédances des milieux gazeux et du matériau sont correctement adaptées.

Grâce à l'opération de vulcanisation réalisée sur le profilé en élastomère après assemblage des tenons 14 et mortaises 16 on obtient un conduit résistant car la vulcanisation provoque une cohésion des deux éléments qui se lient moléculairement. Il est toutefois également possible de déposer en continu un cordon de colle à l'intérieur de la mortaise 16 dans le cas où le profilé 12 est vulcanisé préalablement à son assemblage.

## Revendications

1.  Conduit tubulaire de raccordement (10) du type constitué par un profilé (12) enroulé en hélice à spires jointives autour de l'axe du conduit, dont la section est oblongue avec sa plus grande dimension qui s'étend sensiblement parallèlement à l'axe (X-X) de l'hélice et qui comporte un tenon longitudinal (14) faisant saillie vers l'extérieur et une mortaise longitudinale (16) de profil correspondant agencée parallèlement et de manière opposée au tenon, caractérisé en ce que ledit profilé est un profilé tubulaire qui délimite au moins une chambre hélicoïdale d'atténuation acoustique (12) séparée des moyens d'assemblage par tenon (14) et mortaise (16).

2.  Conduit tubulaire selon la revendication 1, caractérisé en ce que le tenon (14) et la mortaise (16) sont agencés dans un plan contenant la plus grande dimension de ladite section oblongue.

3.  Conduit tubulaire selon l'une des revendications 1 ou 2, caractérisé en ce que la chambre hélicoïdale d'atténuation acoustique est divisée en deux chambres hélicoïdales parallèles (22a, 22b) par une paroi intérieure transversale (36) du profilé (12).

4.  Conduit tubulaire selon l'une quelconque des revendications précédentes, caractérisé en ce que la paroi interne (20) du profilé comporte au moins une ouverture (26, 34) reliant la chambre d'atténuation (22) à l'espace interne (24) du conduit (10).

5.  Conduit tubulaire selon la revendication 4, caractérisé en ce que la paroi interne (18) du profilé comporte une série de trous (26) répartis en hélice autour de l'axe (X-X) du conduit.

6. Conduit selon l'une quelconque des revendications précédentes, caractérisé en ce qu'il est réalisé en matériau élastomère naturel ou synthétique.

7. Conduit selon l'une quelconque des revendications 1 à 6, caractérisé en ce qu'il est réalisé en matériau thermoplastique.

**Patentansprüche**

1. Rohrförmige Kupplungsleitung (10), bestehend aus einem Profil (12), das in einer Schraube mit aneinander anliegenden Windungen um die Achse der Leitung gerollt ist, das einen länglichen Querschnitt besitzt, dessen größere Abmessung sich im wesentlichen parallel zur Achse X-X der Schraube erstreckt, und das einen nach außen vorstehenden Längszapfen (14) und eine Längsnut (16) mit entsprechendem Profil besitzt, die zum Zapfen parallel und entgegengesetzt angeordnet ist, dadurch gekennzeichnet, daß das Profil ein Rohrprofil ist, das wenigstens eine schraubenförmige Schalldämpfungskammer (12) angrenzt, die von den Mitteln zur Verbindung durch den Zapfen (14) und die Nut (16) getrennt sind.

2. Rohrleitung nach Anspruch 1, dadurch gekennzeichnet, daß der Zapfen (14) und die Nut (16) in einer Ebene angeordnet sind, in der die größte Abmessung des länglichen Querschnitts liegt.

3. Rohrleitung nach einem der Ansprüche 1 oder 2, dadurch gekennzeichnet, daß die schraubenförmige Schalldämpfungskammer durch eine innere Querwand (36) des Profils (12) in zwei parallele schraubenförmige Kammern (22a, 22b) unterteilt ist.

4. Rohrleitung nach einem der vorhergehenden Ansprüche, dadurch gekennzeichnet, daß die Innenwand (20) des Profils wenigstens eine Öffnung (26, 34) umfaßt, die die Dämpfungskammer (22) mit dem Innenraum (24) der Leitung (10) verbindet.

5. Rohrleitung nach Anspruch 4, dadurch gekennzeichnet, daß die Innenwand (18) des Profils eine Reihe von Löchern (26) umfaßt, die in einer Schraube um die Achse X-X der Leitung herum verteilt sind.

6. Leitung nach einem der vorhergehenden Ansprüche, dadurch gekennzeichnet, daß sie aus einem natürlichen oder synthetischen Elastomerwerkstoff besteht.

7. Leitung nach einem der Ansprüche 1 bis 6, dadurch gekennzeichnet, daß sie aus einem Thermoplastwerkstoff besteht.

**Claims**

1. Tubular connecting pipe (10) of the type constituted by a sectional member (12) wound helically with adjacent turns around the axis of the pipe, whereof the cross-section is oblong with its largest dimension which extends substantially parallel to the axis (X-X) of the helix and which comprises a longitudinal tenon (14) projecting outwards and a longitudinal mortise (16) of corresponding profile arranged parallel to and in the opposite manner to the tenon, characterised in that said sectional member is a tubular sectional member which defines at least one sound-absorbing helical chamber (12) separated from the assembly means comprising a tenon (14) and mortise (16).

2. Tubular pipe according to Claim 1, characterised in that the tenon (14) and the mortise (16) are arranged in a plane containing the largest dimension of said oblong section.

3. Tubular pipe according to one of Claims 1 or 2, characterised in that the sound-absorbing, helical chamber is divided into two parallel helical chambers (22a, 22b) by a transverse inner wall (36) of the sectional member (12).

4. Tubular pipe according to one of the preceding Claims, characterised in that the inner wall (20) of the sectional member comprises at least one opening (26, 34) connecting the sound-absorbing chamber (22) to the inner space (24) of the pipe (10).

5. Tubular pipe according to Claim 4, characterised in that the inner wall (18) of the sectional member comprises a series of holes (26) distributed helically around the axis (X-X) of the pipe.

6. Pipe according to one of the preceding Claims, characterised in that it is made from a natural or synthetic elastomeric material.

7. Pipe according to one of Claims 1 to 6, characterised in that it is made from thermoplastics material.

## FIG_1

## FIG_2

## FIG_3